# EUROPÄISCHE PATENTANMELDUNG

(11) **EP 2 626 756 A1**
(43) Veröffentlichungstag der Anmeldung: **14.08.2013**
(21) Anmeldenummer: 13000608.3
(22) Anmeldetag: 06.02.2013
(51) Int. Cl.: G05B 19/042, B26D 7/00

(54) **Vorrichtung mit erweiterter Realität**

(30) Priorität: 10.02.2012 DE 102012002657
(71) Anmelder: Weber Maschinenbau GmbH Breidenbach, 35236 Breidenbach (DE)
(72) Erfinder: Rother, Ingo, 35236 Breidenbach (DE)
(74) Vertreter: Grünecker, Kinkeldey, Stockmair & Schwanhäusser

(57) **Zusammenfassung**

Die Erfindung bezieht sich auf eine auf eine Vorrichtung zum Verarbeiten und/oder zum Transport von Lebensmittelprodukten. Die Vorrichtung umfasst ein die Vorrichtung (1) steuerndes Bedienelement (8), wobei die Position des Bedienelements (8) relativ zur Vorrichtung (1) veränderlich ist. Die Erfindung zeichnet sich dadurch aus, dass die momentane Position und/oder die Ausrichtung des Bedienelements (8) relativ zur Vorrichtung (1) durch eine Lageerkennungseinrichtung (15a) ermittelbar ist, und dass Informationen (19) zur Bedienung und/oder zur Diagnose der Vorrichtung (1) in Abhängigkeit der ermittelten Position durch das Bedienelement (8) für einen Benutzer darstellbar sind.

## Beschreibung

Die Erfindung bezieht sich auf eine Vorrichtung zum Verarbeiten und/oder zum Transport von Lebensmittelprodukten gemäß dem Oberbegriff des Anspruchs 1 sowie auf ein Verfahren zum Betrieb einer solchen Vorrichtung gemäß dem Anspruch 14.

Beispielsweise ist aus der DE 2004 062 393 A1 eine lebensmittelverarbeitende Vorrichtung bekannt, die mittels eines Bedienelementes gesteuert werden kann. Aus der Praxis sind weitere Anwendungen bekannt, bei denen die Position des Bedienelements relativ zur Vorrichtung veränderlich ist.

Solche Vorrichtungen sind derart komplex gestaltet, dass bei der Bedienung zahlreiche komplexe Elemente und Einstellungen zu überblicken sind.

Aus der US 2005/0021281 A1 ist ein System bekannt, das den Benutzer einer Produktionsanlage bei der Installation, Bedienung, oder Wartung mithilfe begleitender Informationen, einer sogenannten erweiterten Realität oder augmented reality, unterstützen soll. Das darin beschriebene System umfasst eine Datenbrille mit einer ersten Kamera. Der die Datenbrille tragende Benutzer richtet die Kamera auf die Produktionsmaschine, um Bilder dergleichen aufzuzeichnen. Die Position der Kamera wird durch ein Computersystem bestimmt und dem Träger der Datenbrille werden Informationen zu der Produktionsmaschine in die Brille eingeblendet. Nachteilig daran ist, dass das System zahlreiche kostenintensive Komponenten verwendet, um den Benutzer mit Informationen zu der Produktionsmaschine zu versorgen.

Die Aufgabe der vorliegenden Erfindung ist es, eine Vorrichtung zur Verarbeitung von Lebensmitteln zur Verfügung zu stellen, bei der mit konstruktiv möglichst einfachen Mitteln eine intuitive Bedienung der Vorrichtung möglich ist.

Diese Aufgabe wird gelöst durch eine Vorrichtung mit den Merkmalen des Anspruchs 1 bzw. durch ein Verfahren zum Betrieb einer solchen Vorrichtung nach Anspruch 14. Vorteilhafte Weiterbildungen der Erfindung sind in den Unteransprüchen angegeben.

Die erfindungsgemäße Vorrichtung zeichnet sich dadurch aus, dass die momentane Position und/oder die Ausrichtung des Bedienelements relativ zur Vorrichtung durch eine Lageerkennungseinrichtung ermittelbar ist, und dass Informationen zur Bedienung und/oder zur Diagnose der Vorrichtung in Abhängigkeit der ermittelten Position durch das Bedienelement für einen Benutzer darstellbar sind. Der Einsatz einer Lageerkennungseinrichtung zur Ermittlung der Position und/oder Ausrichtung des Bedienelements bietet den Vorteil, dass keine rechenintensive Bildverarbeitung, wie bei einer Lagererkennung durch einen Bildvergleich notwendig ist.

Besonders vorteilhaft ist es, wenn das Bedienelement die Informationen visuell und/oder hörbar und/oder fühlbar für den Benutzer darstellen kann. Dies ermöglicht eine besonders intuitive Bedienung der Vorrichtung, da mehrere Sinne des Benutzers angesprochen werden können. Es ist dabei denkbar, dass nur bestimmte Informationen visuell, andere wiederum nur hörbar und weitere Informationen nur fühlbar darstellbar sind. Auch das kombinierte Ansprechen mehrerer Sinne, beispielsweise um besonders wichtige Informationen hervorzuheben, ist möglich.

Um einen größeren Bereich des lebensmittelverarbeitenden Produktionsprozesses überblicken, diagnostizieren oder bedienen zu können, kann es vorteilhaft sein, wenn das Bedienelement für eine Kommunikation mit weiteren lebensmittelverarbeitenden Vorrichtungen eingerichtet ist. So ist es beispielsweise denkbar, dass mit ein und demselben Bedienelement ein am Anfang der Produktionskette angeordnetes Transportsystem, eine nachfolgende Schneidemaschine sowie eine darauffolgend nachgeordnete Verpackungsmaschine bedient und/oder überwacht und/oder diagnostiziert werden. Vorteilhafterweise sind das Bedienelement und/oder die Vorrichtung selbst für die bidirektionale Kommunikation mit diesen weiteren Vorrichtungen des Produktionsprozesses eingerichtet.

Vorzugsweise ist das Bedienelement bei unterschiedlichen Maschinentypen zur Bearbeitung von Lebensmitteln einsetzbar, Vornehmlich bei Slicern, Food Robotern, Einlegautomaten, Pellmaschinen und Skinnern. Insbesondere bei solchen Maschinen ermöglicht das Bedienelement eine verbesserte Betriebskontrolle.

Als besonders vorteilhaft hat es sich erwiesen, wenn das Bedienelement ortsfest an der Vorrichtung gelagert ist und das Bedienelement relativ zur Vorrichtung schwenkbar und/oder drehbar ist. Somit kann die Lageerkennungseinrichtung unmittelbar an der Vorrichtung und/oder dem Bedienelement angeordnet sein, was eine besonders einfache und kostengünstige Ausführung des Informationssystems gestattet. Damit ist eine Kabelverbindung zwischen der Vorrichtung und dem Bedienelement ausreichend.

Zweckmäßig ist es, wenn das Bedienelement ferner ein Anzeigefeld umfasst, mit dem gleichzeitig mindestens zwei unterschiedliche Bilder darstellbar sind. Ein solches Anzeigefeld ist konstruktiv einfach in das Bedienelement zu integrieren.

Eine besonders günstige Ausführungsvariante der Erfindung sieht vor, dass das Anzeigefeld ein berührungsempfindlicher Bildschirm zur gleichzeitigen Bildwiedergabe und Benutzereingabe ist. Dies ermöglicht eine besonders intuitive, benutzerfreundliche Bedienung des Bedienelements und der gesamten Vorrichtung durch den Benutzer. Zudem können weitere Komponenten des Bedienelements eingespart werden.

Besonders zweckmäßig ist es, wenn in einem ersten Bild des Anzeigefelds ein Abbild der Vorrichtung oder von Komponenten der Vorrichtung darstellbar sind und die Informationen zur Vorrichtung in einem zweiten Bild darstellbar sind. Das erste und das zweite Bild können nebeneinander oder sich überlagernd dargestellt werden. Das heißt, dass sich die Bildebenen des ersten und des zweiten Bildes gegenseitig überlagern.

Durch eine Bewegung des Bedienelements hin zu einer bestimmten Komponente und/oder Baugruppe der Vorrichtung ist vorzugsweise die Komponente und/oder Baugruppe in einer ersten Bildebene auf dem Anzeigefeld des Bedienelements darstellbar, wobei in einer zweiten Bildebene Einstellungen und/oder sonstige Informationen einblendbar sind, die zur Komponente und/oder Baugruppe der ersten Bildebene gehören. Als Einstellungen wären beispielsweise Ist- und/oder Sollwerte des momentanen Betriebs möglich. Zu den sonstigen Informationen könnten beispielsweise Wartungsinformationen gehören.

Vorteilhaft ist es, wenn die zweite Bildebene relativ zur ersten Bildebene im Vordergrund darstellbar ist, um die Informationen zu der Abbildung der ersten Bildebene besonders deutlich wiederzugeben. Vorzugsweise ist diese Variante entweder automatisch oder durch einen bestimmten Befehl abrufbar.

Vorteilhafterweise umfasst das Bedienelement ferner eine Kamera, sodass das Abbild der Vorrichtung in dem ersten Bild des Anzeigefelds mithilfe der Kamera in Echtzeit darstellbar ist. Somit gibt das Anzeigefeld des Bedienelements die von der Kamera erfassten Objekte realitätsnah wieder.

Besonderes vorteilhaft ist es, wenn die in dem zweiten Bild darzustellenden Informationen in Abhängigkeit von Betriebsparametern und/oder Vorgaben der Vorrichtung und/oder des Bedienelements darstellbar sind. Dies ermöglicht es, besonders wichtige Informationen hervorzuheben oder weniger wichtige Informationen auszublenden.

In einer besonders vorteilhaften Ausführungsvariante der Erfindung ist es möglich, das Bedienelement von der Vorrichtung abzulösen und relativ zur Vorrichtung frei zu bewegen. Ein Benutzer der Vorrichtung ist somit nicht an einen bestimmten Ort an der Vorrichtung gebunden, sondern kann sich dazu frei bewegen. Dabei ist es denkbar, dass das Bedienelement über eine Leitung, beispielsweise ein Datenkabel, mit der Vorrichtung verbunden ist und mittels der Leitung mit dieser kommuniziert.

Besonders zweckmäßig ist es, wenn die Vorrichtung und/oder das Bedienelement für eine drahtlose, bidirektionale Kommunikation eingerichtet sind. Dies erlaubt es dem Bedienelement Daten an die Vorrichtung zu übermitteln und erlaubt es weiter der Vorrichtung Daten an das Bedienelement zu ermitteln. Darüber hinaus ist es denkbar, dass die drahtlose, bidirektionale Kommunikation zwischen dem Bedienelement und weiteren Vorrichtungen des lebensmittelverarbeitenden Prozesses erfolgt.

Vorteilhafterweise ist die Lageerkennungseinrichtung durch ein Zusammenwirken der Kamera mit an der Vorrichtung angebrachten Markern und/oder Referenzbildern der Vorrichtung gebildet. Wenn Referenzbilder zu der Vorrichtung in einem Speichermodul einer elektronischen Steuerung hinterlegt sind, kann durch einen Bildvergleich des aktuellen Bildes, beispielsweise ein Kamerabild, mit den Referenzbildern die aktuelle Ausrichtung und/oder Lage des Bedienelements relativ zur Vorrichtung ermittelt werden.

Es hat sich als vorteilhaft erwiesen, wenn die Art der Darstellung und/oder der Umfang der darzustellenden Informationen' mittels dem Bedienelement einstellbar sind. Somit kann der Benutzer selbst entscheiden, welche Informationen er wie darstellen oder ob er auf die Darstellung verzichten möchte. So ist es möglich, den Informationsgehalt für verschiedene Betriebsmodi der Vorrichtung durch eine entsprechende Einstellung anzupassen.

Das erfindungsgemäße Verfahren zeichnet sich dadurch aus, dass die Position und/oder die Ausrichtung des Bedienelements relativ zur Vorrichtung mit einer Lageerkennungseinrichtung ermittelt wird. Weiter erfolgt eine Ausgabe von Informationen zur Bedienung und/oder Diagnose der Vorrichtung in Abhängigkeit der ermittelten Position.

Vorteilhaft ist es, wenn die Vorrichtung oder Komponenten davon in einem ersten Bild eines Anzeigefelds des Bedienelements dargestellt werden, und wenn ferner in einem zweiten Bild des Anzeigefelds die Informationen zur Bedienung und/oder Diagnose der Vorrichtung dargestellt werden. Somit wird die Darstellung der Vorrichtung um weitere hilfreiche Informationen erweitert und die Bedienung der Vorrichtung intuitiver gestaltet.

Im Folgenden werden vorteilhafte Ausführungsbeispiele der Erfindung anhand von Zeichnungen näher erläutert. Im Einzelnen zeigen:
- Figur 1: eine erfindungsgemäße Vorrichtung in Form einer Schneidemaschine in der Seitenansicht,
- Figur 2: eine weitere Seitenansicht der erfindungsgemäßen Vorrichtung,
- Figur 3: ein Bedienelement der erfindungsgemäßen Vorrichtung in der Forderansicht, und
- Figur 4: das Bedienelement aus Figur 3 in der Rückansicht.

Gleiche Komponenten sind in den Figuren durchgängig mit gleichen Bezugszeichen versehen.

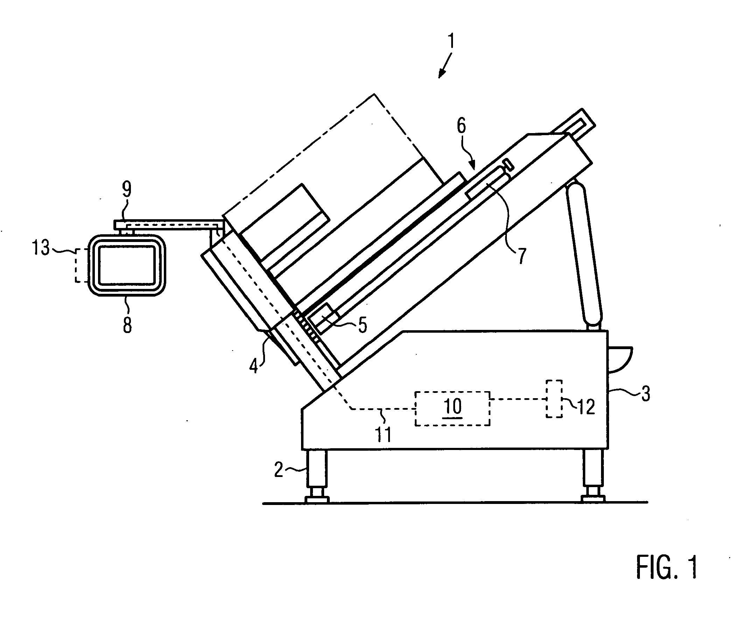

Figur 1 zeigt eine erfindungsgemäße Vorrichtung 1 zur Verarbeitung und/oder zum Transport von Lebensmittelprodukten in der Seitenansicht. In diesem Ausführungsbeispiel ist die Vorrichtung 1 in Form einer Schneidemaschine dargestellt, die auch als sogenannter Slicer bekannt ist. Diese Slicer werden insbesondere zum Aufschneiden von Wurst und Käse verwendet.

Die Vorrichtung 1 verfügt über ein Maschinengestell 2, das die Vorrichtung 1 trägt. Um die Vorrichtung vor Umwelteinflüssen zu schützen, ist diese mit einem Gehäuse 3 ummantelt. Die hier als Schneidemaschine ausgeführte Vorrichtung 1 weist weiter ein rotierendes Kreismesser 4 auf, mit dem ein Lebensmittelprodukt 5, insbesondere Wurst oder Käse, aufgeschnitten werden kann. Für das Zuführen des aufzuschneidenden Lebensmittelprodukts 5 weist die Vorrichtung 1 weiter eine Produktzufuhr 6 mit einem Produkthalter 7 auf, durch deren Vorschub das Lebensmittelprodukt 5 in Richtung des Kreismessers 4 gefördert wird.

Zur Überwachung und Steuerung der Vorrichtung 1 verfügt diese über ein Bedienelement 8 mit einem integrierten Mikrocontroller 8a und einen Lagesensor 8b, das an einem Tragarm 9 gelagert ist. Die Befestigung des Bedienelements 8 an dem Tragarm 9 kann durch eine geeignete Lagerung erfolgen, die ein Schwenken und/oder Drehen um mehrere Achsen des Bedienelements 7 und relativ zur Vorrichtung 1 zulässt. Dies kann beispielsweise ein Kugelkopf (nicht dargestellt) sein. Ebenso ist es möglich, dass sich das Bedienelement 6 relativ zum Tragarm 9 um eine vertikale Achse drehen lässt.

Die Vorrichtung 1 weist weiterhin eine Steuereinheit 10 auf, die vor Umwelteinflüssen geschützt innerhalb des Gehäuses 3 angeordnet ist. Die Steuereinheit 10 ist ein programmierbarer Mikrocontroller, der mehrere Eingänge und Ausgänge umfasst. Das Bedienelement 8 und die Steuereinheit 10 sind über ein Datenkabel 11 miteinander verbunden, so dass das Bedienelement 8 direkt mit der Steuereinheit 10 bidirektional Daten austauschen kann.

Für eine drahtlose Datenverbindung, beispielsweise mit dem Bedienelement 8, ist die Steuereinheit 10 mit einer Antenne 12 verbunden. Die Steuereinheit 10 und/oder die Antenne 12 und/oder das Bedienelement 13 können dazu eingerichtet sein, über Übertragungsprotokolle miteinander zu kommunizieren. Für eine drahtlose Kommunikation mit der Vorrichtung 1 bzw. der Steuereinheit 10 verfügt das Bedienelement 8 deshalb über eine integrierte Antenne 13.

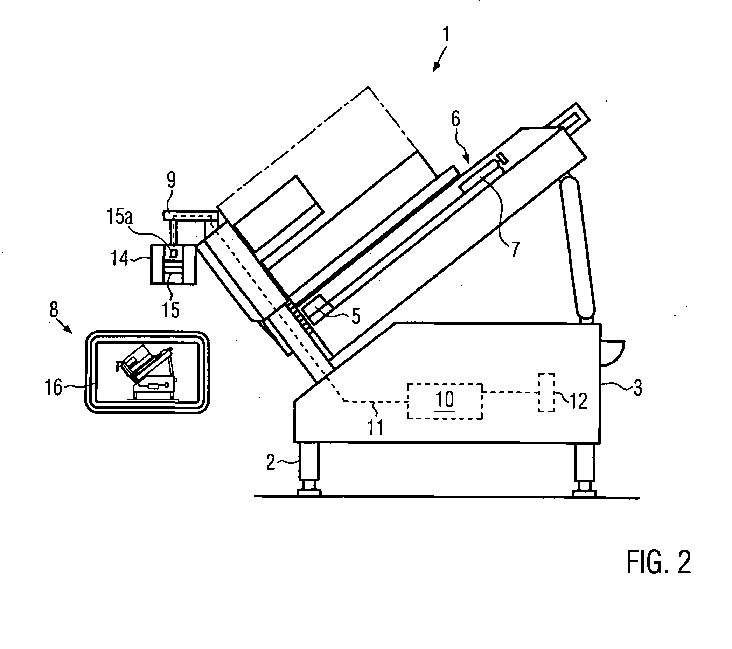

Figur 2 zeigt eine weitere Seitenansicht der erfindungsgemäßen Vorrichtung 1, bei der das Bedienelement 8 von dem Tragarm 9 gelöst ist. Es ist gut zu erkennen, dass das Bedienelement 8 von einer Aufnahmeplatte 14, auch als Docking Station bezeichnet, gehalten wird. Die Aufnahmeplatte 14 verfügt weiter über mehrere Pins 15, die elektrisch leitend sind und für die Spannungsversorgung des Bedienelements 8 und/oder die Datenkommunikation mit demselben vorgesehen sind. In Nachbarschaft zur Aufnahmeplatte 14 bzw. zum Tragarm 9 oder dem (nicht dargestellten) Kugelkopf weist die Vorrichtung 1 weiter eine Lageerkennungseinrichtung 15a in Form eines Sensors auf. Die Lageerkennungseinrichtung 15a ist dazu eingerichtet, die momentane Ausrichtung des Bedienelements 8 relativ zur Vorrichtung 1 und/oder zum Tragarm 9 zu bestimmen und ist weiter für eine Kommunikation mit dem Bedienelement 8 und/oder der Steuereinheit 10 eingerichtet.

Das Bedienelement 8 weist ein stoßfestes Gehäuse 15 sowie ein Anzeigefeld 16 auf. Die Antenne 13 kann in das Gehäuse 15 integriert sein. Das Anzeigefeld 16 ist ein berührungsempfindlicher Bildschirm, der gleichzeitig Zeichen und Bilder darstellen und Benutzereingaben verarbeiten kann. In dem dargestellten Beispiel ist ein Abbild der Vorrichtung 1 im Anzeigefeld 16 des Bedienelements 8 dargestellt.

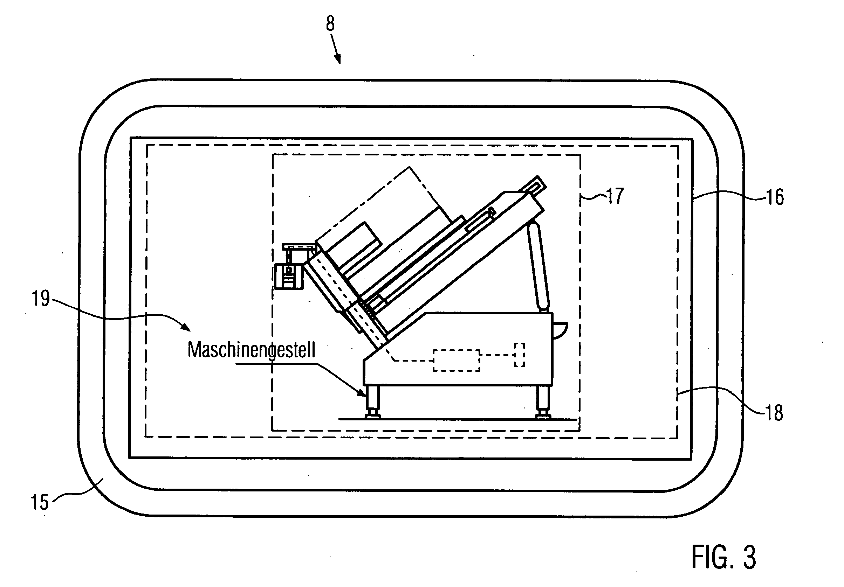

Figur 3 zeigt das Bedienelement 8, vergrößert dargestellt, in der Vorderansicht. Es ist gut zu erkennen, dass das Anzeigefeld dazu eingerichtet ist, zwei Bilder gleichzeitig darzustellen. Ein erstes Bild 17 zeigt das Abbild der Vorrichtung 1. Ein zweites Bild 18, das das erste Bild 17 überlagert, stellt Informationen 19 dar. Das zweite Bild 18 ergänzt somit das erste Bild 17 um die zusätzlichen Informationen 19. Der Inhalt bzw. Umfang der Informationen 19 können beispielsweise Angaben aus der Bedienungsanleitung mit Erklärungen zu der Vorrichtung 1 und deren Komponenten sein, um das für die Reparatur oder die Wartung zuständige Servicepersonal zu unterstützen. Es können jedoch auch aktuelle Betriebsdaten der Vorrichtung 1, wie Einstellungen oder die Momentandrehzahl des Kreismessers 4, sein.

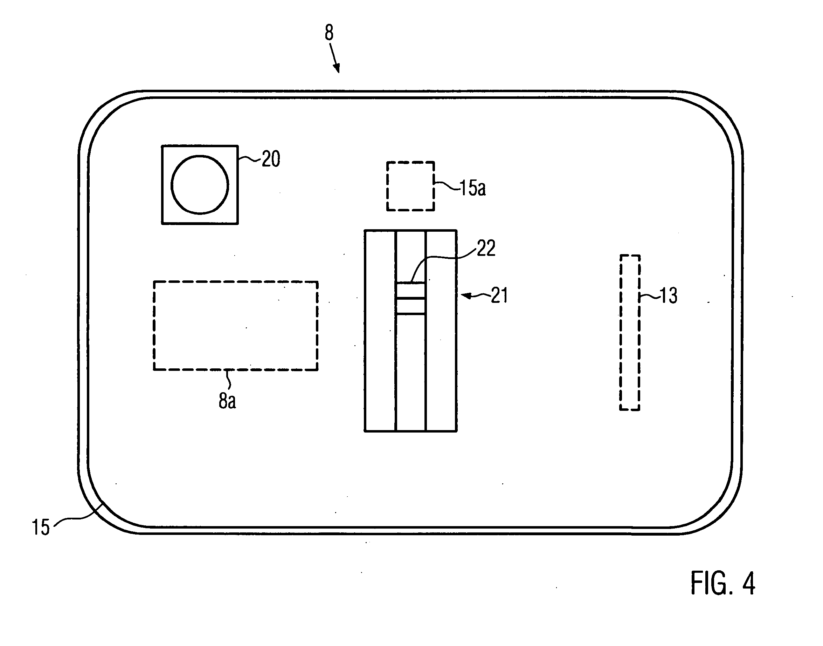

Figur 4 zeigt das Bedienelement 8 aus Figur 3 in der Rückansicht. Das Bedienelement verfügt auf seiner Rückseite über eine Kamera 20. Weiter weist das Bedienelement eine Kontaktschiene 21 mit Pins 22 auf, die für ein Zusammenwirken mit der Aufnahmeplatte 14 und den Pins 15 eingerichtet ist. Die Pins 22 dienen beispielsweise der Spannungsversorgung des Bedienelements 8 sowie der Datenkommunikation mit der Vorrichtung 1.

Die generelle Funktionsweise der erfindungsgemäßen Vorrichtung 1 wird im Folgenden kurz erläutert.

Solange das Bedienelement 8 ortsfest an der Vorrichtung 1 gelagert ist bzw. von der Aufnahmeplatte 14 getragen wird, erfolgt die Erkennung der momentanen Ausrichtung bzw. Lage des Bedienelements 8 relativ zur Vorrichtung bzw. zum Tragarm 9 durch die als Sensor ausgeführte Lageerkennungseinrichtung 15a stationär.

In Abhängigkeit vom Schwenkwinkel und/oder dem Drehwinkel des Bedienelements 8 kann das Anzeigefeld 16 des Bedienelements 8 die Vorrichtung 1 oder bestimmte Komponenten davon, d.h. Ausschnitte der Vorrichtung 1, im ersten Bild 17 darstellen. Das angezeigte Bild kann dabei bereits in einem (nicht dargestellten) Speicher des Mikrocontrollers 8a des Bedienelements 8 und/oder in der Steuereinheit 10 hinterlegt sein.

In einer weiteren Konfiguration ist die Darstellung im ersten Bild 17 des Anzeigefelds 16 eine Echtzeitdarstellung der von der Kamera 20 optisch erfassten Vorrichtung 1. Ein Benutzer der Vorrichtung 1 dreht oder schwenkt das Bedienelement 8 um die Vorrichtung 1 herum, wobei die Kamera 20 auf die Vorrichtung ausgerichtet ist. Im ersten Bild 17 wird die Vorrichtung 1 oder ein Teil davon angezeigt. In Abhängigkeit der von der Lageerkennungseinrichtung 15a ermittelten Lage und Ausrichtung des Bedienelements 8 wird das erste Bild 17 vom zweiten Bild 18, das Informationen 19 zu dem im ersten Bild 17 dargestellten Teil der Vorrichtung 1 enthält, überlagert. Die angezeigten Informationen 19 kann der Benutzer vorab festlegen. So kann er beispielsweise zwischen einem ProduktionsModus, in dem er Informationen zur Produktion, wie Schnittführung oder Verarbeitungsgeschwindigkeit, erhält und einem Diagnose-Modus wählen, der überwiegend Informationen für die Wartung oder Reparatur der Vorrichtung 1 beinhaltet.

Wird das Bedienelement 8, wie in Figur 2 dargestellt, von der Aufnahmeplatte 14 und damit von der Vorrichtung 1 gelöst, erfolgt die Lageerkennung bzw. die Bestimmung der momentanen Ausrichtung des Bedienelements 8 anhand weiterer, applizierbarer bzw. konfigurierbarer Mechanismen. Die Lageerkennung kann dann über den in das Bedienelement 8 integrierten Sensor 8b erfolgen.

Ausgehend von dem dargestellten Ausführungsbeispiel kann die erfindungsgemäße Vorrichtung 1 auf vielfache Weise abgewandelt werden. So kann das Bedienelement 8 so eingestellt werden, dass die Lageerkennung mithilfe eines Vergleichs von Kamerabildem der Kamera 20 und geeigneten Referenzbildern erfolgt.

Weiter könnte die Lageerkennung mithilfe von gut detektierbaren Markern (nicht dargestellt), die auf der Vorrichtung 1 angeordnet sind, erfolgen.

Es ist weiter denkbar, dass das Bedienelement 8 mit einer Vielzahl von lebensmittelverarbeitenden Vorrichtungen kommuniziert und diese steuern bzw. diagnostizieren kann.

Die Informationen 19 könnten Abbildungen, beispielsweise Explosionsskizzen, von innenliegenden Teilen der Vorrichtung 1 enthalten, um dem Service-Personal hilfreiche Informationen zu liefern.

## Patentansprüche

1. Vorrichtung (1) zum Verarbeiten und/oder zum Transport von Lebensmittelprodukten, mit einem die Vorrichtung (1) steuernden Bedienelement (8), wobei die Position des Bedienelements (8) relativ zur Vorrichtung (1) veränderlich ist,
**dadurch gekennzeichnet,**
**dass** die momentane Position und/oder die Ausrichtung des Bedienelements (8) relativ zur Vorrichtung (1) durch eine Lageerkennungseinrichtung (15a) ermittelbar ist, und dass Informationen (19) zur Bedienung und/oder zur Diagnose der Vorrichtung (1) in Abhängigkeit der ermittelten Position durch das Bedienelement (8) für einen Benutzer darstellbar sind.

2. Vorrichtung nach Anspruch 1, **dadurch gekennzeichnet, dass** die Informationen (19) durch das Bedienelement (8) visuell und/oder hörbar und/oder fühlbar für den Benutzer darstellbar sind.

3. Vorrichtung nach Anspruch 1 oder 2, **dadurch gekennzeichnet, dass** das Bedienelement (8) für eine Kommunikation mit weiteren lebensmittelverarbeitenden Vorrichtungen eingerichtet ist.

4. Vorrichtung nach einem der vorangehenden Ansprüche, **dadurch gekennzeichnet, dass** das Bedienelement (8) ortsfest an der Vorrichtung (1) gelagert ist, wobei das Bedienelement (8) relativ zur Vorrichtung (1) schwenkbar und/oder drehbar ist.

5. Vorrichtung nach einem der vorangehenden Ansprüche, **dadurch gekennzeichnet, dass** das Bedienelement (8) ferner ein Anzeigefeld (16) umfasst, mit dem gleichzeitig mindestens zwei unterschiedliche Bilder (17, 18) darstellbar sind.

6. Vorrichtung nach Anspruch 5, **dadurch gekennzeichnet, dass** das Anzeigefeld (16) ein berührungsempfindlicher Bildschirm zur gleichzeitigen Bildwiedergabe und Benutzereingabe ist.

7. Vorrichtung nach einem der Ansprüche 5 oder 6, **dadurch gekennzeichnet, dass** in einem ersten Bild (17) des Anzeigefelds (16) ein Abbild der Vorrichtung (1) oder von Komponenten der Vorrichtung (1) darstellbar sind und die Informationen (19) zur Vorrichtung (1) in einem zweiten Bild (18) darstellbar sind.

8. Vorrichtung nach Anspruch 7, **dadurch gekennzeichnet, dass** das erste Bild (17) und das zweite Bild (18) überlagerbar sind, um das erste Bild (17) mit den Informationen (19) des zweiten Bildes (18) zu ergänzen.

9. Vorrichtung nach Anspruch 7 oder 8, **dadurch gekennzeichnet, dass** das Bedienelement (8) ferner eine Kamera (20) umfasst, und dass das Abbild der Vorrichtung (1) in dem ersten Bild (17) des Anzeigefelds (16) mithilfe der Kamera (20) in Echtzeit darstellbar ist.

10. Vorrichtung nach einem der Ansprüche 7 bis 9, **dadurch gekennzeichnet, dass** die in dem zweiten Bild darzustellenden Informationen (19) in Abhängigkeit von Betriebsparametern und/oder Vorgaben der Vorrichtung (1) und/oder des Bedienelements (8) darstellbar sind.

11. Vorrichtung nach einem der vorangehenden Ansprüche, **dadurch gekennzeichnet, dass** das Bedienelement (8) von der Vorrichtung (1) ablösbar und ferner relativ zur Vorrichtung (1) frei bewegbar ist.

12. Vorrichtung nach einem der vorangehenden Ansprüche, **dadurch gekennzeichnet, dass** die Vorrichtung (1) und/oder das Bedienelement (8) für eine drahtlose, bidirektionale Kommunikation eingerichtet sind.

13. Vorrichtung nach einem der Ansprüche 9 bis 12, **dadurch gekennzeichnet, dass** die Lageerkennungseinrichtung (15a) durch ein Zusammenwirken der Kamera (20) mit an der Vorrichtung (1) angebrachten Markern und/oder Referenzbildern der Vorrichtung (1) gebildet ist.

14. Vorrichtung nach einem der vorangehenden Ansprüche, **dadurch gekennzeichnet, dass** die Art der Darstellung und/oder der Umfang der darzustellenden Informationen (19) mittels des Bedienelements (8) einstellbar sind.

15. Verfahren zum Betrieb einer Vorrichtung (1) mit einem die Vorrichtung (1) steuernden Bedienelement (8), **dadurch gekennzeichnet, dass** die Position und/oder die Ausrichtung des Bedienelements (8) relativ zur Vorrichtung (1) mit einer Lageerkennungseinrichtung (15a) ermittelt werden, und dass eine Ausgabe von Informationen (19) zur Bedienung und/oder Diagnose der Vorrichtung (1) in Abhängigkeit der ermittelten Position erfolgt.

16. Verfahren nach Anspruch 15, **dadurch gekennzeichnet, dass** die Vorrichtung (1) oder Komponenten davon in einem ersten Bild (17) eines Anzeigefelds (16) des Bedienelements (8) dargestellt werden, und dass ferner in einem zweiten Bild (18) des Anzeigefelds (16) die Informationen (19) zur Bedienung und/oder Diagnose der Vorrichtung (1) dargestellt werden.
